# EUROPEAN PATENT APPLICATION

(11) **EP 4 707 142 A1**
(43) Date of publication of application: **11.03.2026**
(21) Application number: 25197764.1
(22) Date of filing: 23.08.2025
(51) Int. Cl.: B62J 1/02, B62J 1/08, B62K 19/36

(54) **SHOCK-ABSORBING SEATPOST ASSEMBLY WITH ADJUSTABLE PRELOAD**

(30) Priority: 04.09.2024 TW 113133478
(71) Applicant: J.D Components Co., Ltd., Shou Shui Hsiang, Chang Hua Hsien 504 (TW)
(72) Inventor: Feng, Pin-Chieh, 320 Shan Hsi Village (TW); Huang, Hsiang-Ling, 320 Shan Hsi Village (TW)
(74) Representative: Straus, Alexander

(57) **Abstract**

A shock-absorbing seatpost assembly includes a seatpost (1), a linkage device (2), an adjustment device (3), and a buffering member (4). The linkage device (2) is connected with an end of the seatpost (1), and the adjustment device (3) is movably inserted into the seatpost (1). The adjustment device (3) is provided with a pressure adjusting unit (31) abutted against a pushing member (24) provided at the linkage device (2). An end of the pressure adjusting unit (31) protrudes outward from the end of the seatpost (1). The buffering member (4) is disposed inside the seatpost (1) and has an end abutted against the pressure adjusting unit (31) of the adjustment device (3). Accordingly, the portion of the pressure adjusting unit (31) exposed outside the seatpost (1) provides adjustment of the preload of the buffering member (4) for riders of different body weights.

## Description

### BACKGROUND OF THE INVENTION

### 1. Field of the Invention

The present invention relates to a shock-absorbing seatpost assembly and more particularly, to a preload adjustable shock-absorbing seatpost assembly. By means of an adjustment device disposed between a linkage device and a buffering member, a rider can change the preload of the buffering member directly without removing the seatpost.

### 2. Description of the Related Art

In the field of bicycles, various bicycle types have been developed to adapt to different terrains. Depending on the terrain, the frame, wheel set, and drivetrain components of a bicycle are differently configured. A seatpost is usually connected with or inserted into the frame of the bicycle, and a saddle is mounted at a top end of the seatpost. When the bicycle runs over uneven surfaces or gravels, the resulting vibration is transmitted from the wheels, through the frame and the seatpost, to the handlebar and the saddle, often causing discomfort to the rider. Therefore, in order to reduce vibration caused by riding over obstacles, some bicycles are equipped with shock absorbers or shock-absorbing seatposts, particularly mountain bikes, to provide effective shock absorption.

Chinese Patent Publication No. CN 218662167 discloses a shock-absorbing seatpost with a four-bar linkage, in which a base, a first link, a second link, and a third link are composed of a linkage mechanism mounted at one end of the seatpost. A compression spring is disposed inside the seatpost, with its upper end abutting against a fixing component, and its lower end provided with a positioning member and a nut. By adjusting the tightness of the nut at the lower end of the compression spring, the preload of the compression spring can be changed. However, in such a structural design, the entire seatpost must first be removed from the frame in order to adjust the nut located at the bottom of the seatpost.

Since riders have different body weights and road conditions also vary, the appropriate shock-absorbing coefficient during riding naturally changes accordingly. If the seatpost must be pulled out each time the preload of the shock-absorbing spring is adjusted, it would cause significant inconvenience in use. Therefore, how to provide a seatpost assembly capable of quickly adjusting the shock-absorbing preload is an issue to be resolved.

### SUMMARY OF THE INVENTION

In view of the foregoing, an objective of the present invention is to provide a shock-absorbing seatpost assembly capable of eliminating or at least alleviating at least one of the drawbacks of the prior art.

To achieve the above-mentioned objective, the present invention provides a preload adjustable shock-absorbing seatpost assembly, which comprises: a seatpost; a linkage device disposed at an end of the seatpost; an adjustment device movably inserted into the seatpost and provided with a pressure adjusting unit that abuts against the linkage device and includes an end protruding outward from the end of the seatpost; and a buffering member disposed inside the seatpost and provided with an end abutted against the pressure adjusting unit of the adjustment device. Accordingly, the end of the pressure adjusting unit exposed outside the seatpost may be operated to provide adjustment of the preload of the buffering member for riders of different body weights.

In one embodiment of the present invention, the linkage device comprises a first link, a second link, and a third link. The first link and the third link each have an end connected with the end of the seatpost in a way that the other ends of the first link and the third link are respectively connected with two ends of the second link.

In one embodiment of the present invention, the third link of the linkage device is formed with a recessed portion.

In one embodiment of the present invention, the linkage device further comprises a pushing member that abuts against the pressure adjusting unit of the adjustment device.

In one embodiment of the present invention, the pushing member is a columnar roller.

In one embodiment of the present invention, the adjustment device further comprises an auxiliary pressure adjusting unit that abuts against the other end of the buffering member and protrudes outward from the other end of the seatpost.

In one embodiment of the present invention, the adjustment device further comprises two cap members respectively disposed at two ends of the buffering member, such that the buffering member is abutted against the pressure adjusting unit and the auxiliary pressure adjusting unit through the two cap members of the adjustment device.

In one embodiment of the present invention, the pressure adjusting unit of the adjustment device comprises a lower member and an upper member inserted into the lower member. The lower member is provided at an outer periphery thereof with a limiting slot, and a limiting member is inserted through the seatpost into the limiting slot.

In one embodiment of the present invention, one end of the upper member of the pressure adjusting unit is formed with external threads, and the other end is formed with at least one operation hole. One end of the lower member is formed with internal threads screwingly engaged with the external threads of the upper member.

In one embodiment of the present invention, the pressure adjusting unit of the adjustment device comprises a plurality of upper members and a lower member having a fixing rod protruding from a central portion thereof. The plurality of upper members are sleeved onto the fixing rod of the lower member. The lower member is further provided at an outer periphery thereof with a limiting slot, and a limiting member is inserted through the seatpost into the limiting slot.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a perspective view of a shock-absorbing seatpost assembly according to an embodiment of the present invention;
FIG. 2 is an exploded view of the shock-absorbing seatpost assembly according to the embodiment of the present invention;
FIG. 3 is a cross-sectional view of the shock-absorbing seatpost assembly according to the embodiment of the present invention;
FIG. 4 is an enlarged cross-sectional view of a part of FIG. 3;
FIG. 5 is a schematic view showing that the shock-absorbing seatpost assembly of the embodiment of the present invention is in a state of use; and
FIG. 6 is a schematic view showing that the shock-absorbing seatpost assembly of the embodiment of the present invention is in another state of use.

### DETAILED DESCRIPTION OF THE INVENTION

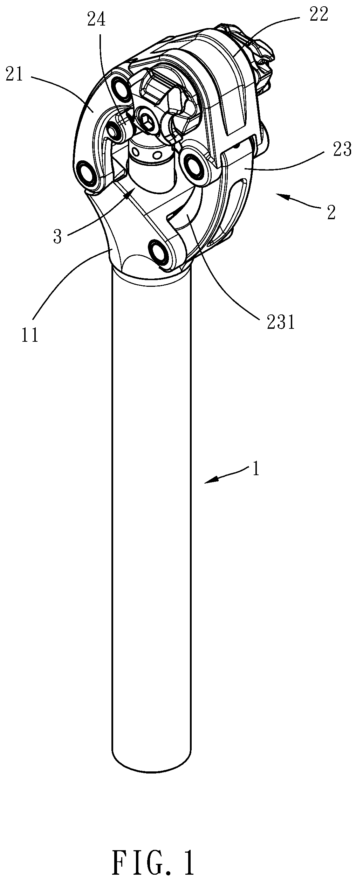

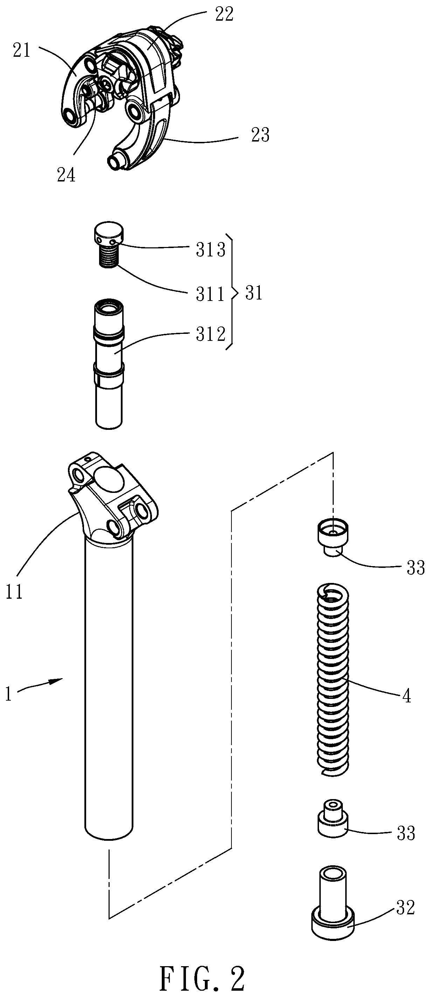

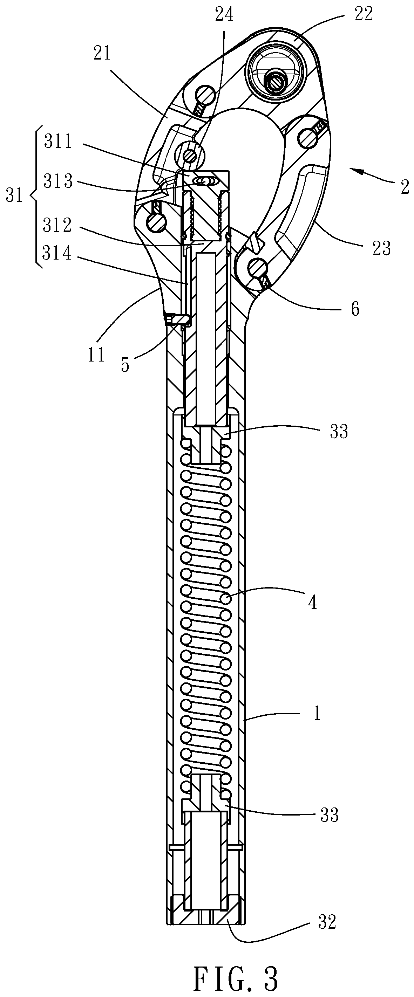

Referring to FIGS. 1 to 4, the preload adjustable shock-absorbing seatpost assembly provided by an embodiment of the present invention is mainly composed of a seatpost 1, a linkage device 2, an adjustment device 3, and a buffering member 4. The seatpost 1 is adapted to be combined with a bicycle frame (not shown), and an end of the seatpost 1 not combined with the bicycle frame, i.e., the top end, is provided with a mounting seat 11 configured to mount the linkage device 2.

The linkage device 2 includes a first link 21, a second link 22, a third link 23, and a pushing member 24. The pushing member 24 is pivotally disposed at a middle portion of the first link 21. The first link 21, serving as a front link, has one end pivotally connected with a front end of the mounting seat 11 of the seatpost 1. The third link 23, serving as a rear link, has one end pivotally connected with a rear end of the mounting seat 11 of the seatpost 1. The other ends of the first link 21 and the third link 23, which are not pivotally connected with the seatpost 1, are respectively pivotally connected with two ends of the second link 22. A bicycle saddle (not shown) is adapted to be mounted on the second link 22 of the linkage device 2.

The adjustment device 3 includes a pressure adjusting unit 31, an auxiliary pressure adjusting unit 32, and two cap members 33. The pressure adjusting unit 31 includes an upper member 311 and a lower member 312. The upper member 311 is inserted into the lower member 312. The lower member 312 is further inserted into the seatpost 1 in such a way that at least a part of the upper member 311 protrudes outward from the top end of the seatpost 1. In this embodiment, the upper member 311 of the pressure adjusting unit 31 may, for example, be a threaded element, wherein the upper member 311 is formed with external threads and at least one operation hole 313. The lower member 312 of the pressure adjusting unit 31 may, for example, be a sleeve element provided at an internal portion of one end thereof with internal threads, i.e., a threaded hole. As such, the external threads of the upper member 311 can be screwingly engaged with the threaded holes of the lower member 312. An outer periphery of the lower member 312 is further provided with a limiting slot 314 extending parallel to the axial direction of the lower member 312. Furthermore, a limiting member 5 is inserted through the seatpost 1 into the limiting slot 314.

A top surface of the upper member 311 of the pressure adjusting unit 31 is abutted against the pushing member 24 of the linkage device 2. Since the pushing member 24 is in the form of a columnar roller having a curved profile, the contact area between the pushing member 24 and the upper member 311 can be reduced, so that the pushing member 24 and the upper member 311 are in line contact instead of surface contact.

In this embodiment, the buffering member 4 is realized as a spring, and may alternatively be, for example, a pneumatic cylinder or a buffer rod made of an elastic material. The buffering member 4 is inserted into the seatpost 1, with one end of the buffering member 4 abutted against the lower member 312 of the pressure adjusting unit 31 through one of the cap members 33 of the adjustment device 3, and the other end of the buffering member 4 abutted against the auxiliary pressure adjusting unit 32 of the adjustment device 3 through the other cap member 33 of the adjustment device 3. Accordingly, the buffering member 4 is disposed between the pressure adjusting unit 31 and the auxiliary pressure adjusting unit 32 of the adjustment device 3. The auxiliary pressure adjusting unit 32 is disposed at the bottom end of the seatpost 1 opposite to the pressure adjusting unit 31, with a portion of the auxiliary pressure adjusting unit 32 protruding outward from the bottom end of the seatpost 1.

Set screws 6 may be provided at the connecting positions among the first link 21, the second link 22, and the third link 23 of the linkage device 2, and at the connecting position where the linkage device 2 is connected with the mounting seat 11 of the seatpost 1. Since these connecting positions frequently pivot due to the rider sitting on the saddle, fixation by the set screws 6 can prevent these connecting positions from loosening.

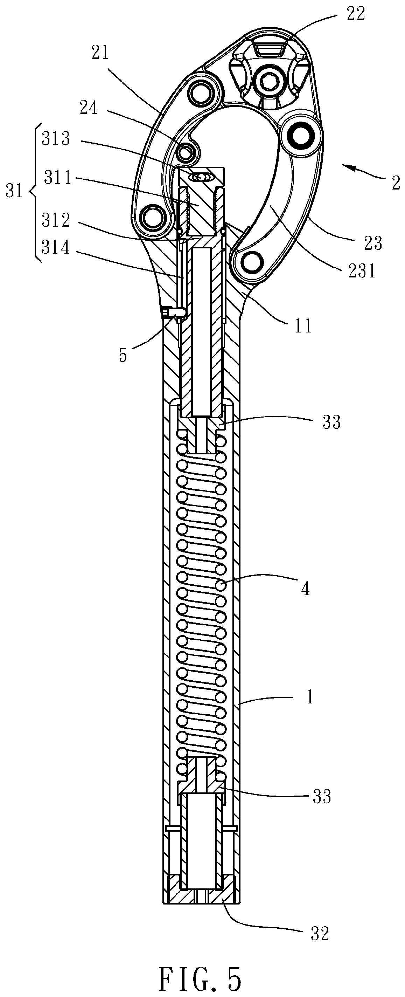

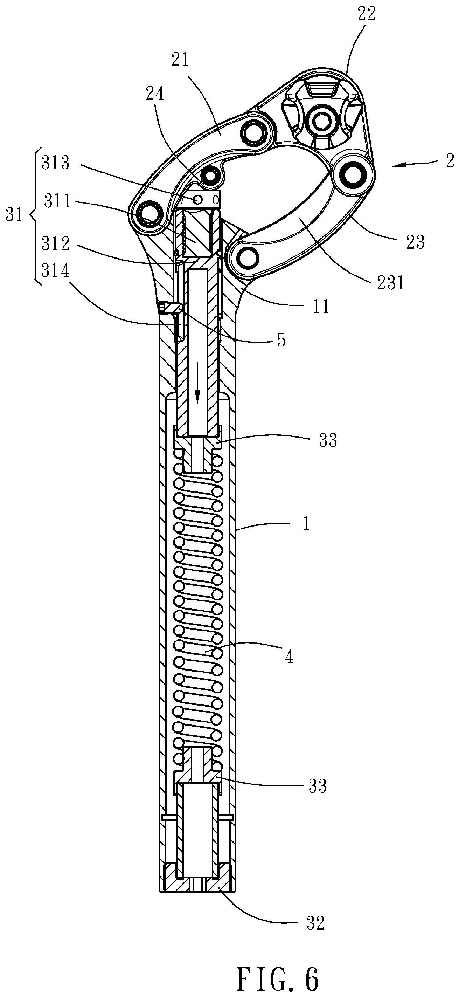

Referring also to FIGS. 5 and 6, when the rider sits on the saddle, the body weight of the rider applies a downward force on the saddle. The downward force is first transmitted from the saddle to the linkage device 2, which is actuated in the direction toward the third link 23 under the applied force. At this time, the pushing member 24 disposed at the first link 21 pushes the upper member 311 and the lower member 312 of the adjustment device 3 downward (as indicated by the arrow in FIG. 6), causing the buffering member 4 to be compressed to offset vibration and thereby achieve a shock-absorbing effect. However, if the rider has a relatively heavy body weight and the preload of the buffering member 4 is insufficient, the buffering member 4 would be excessively compressed in a static state, resulting in insufficient remaining compression stroke of the buffering member 4, which causes discomfort when riding on uneven surfaces.

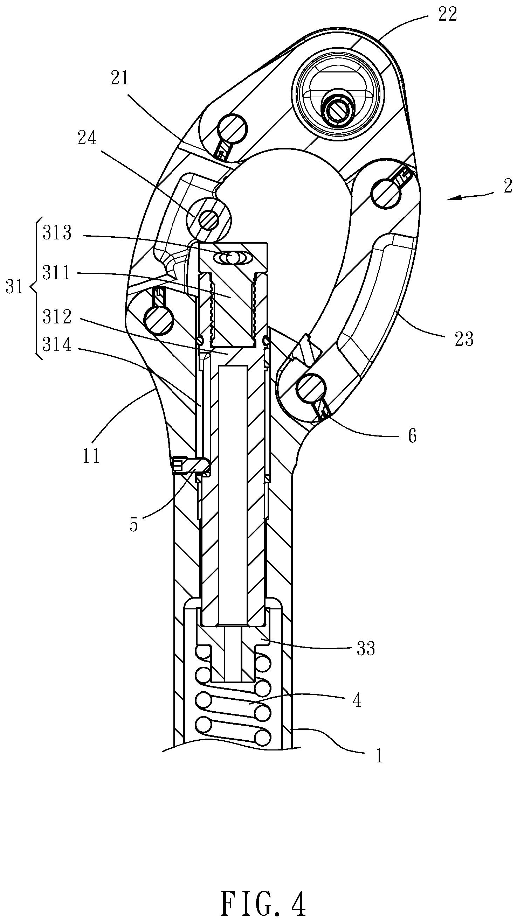

Referring further to FIG. 4, when it is necessary to adjust the preload of the buffering member 4, since the upper member 311 of the pressure adjusting unit 31 of the adjustment device 3 protrudes outward from the seatpost 1, and in this embodiment the upper member 311 is further provided with external threads, the rider may simply use a tool that can be inserted into the operation hole 313 of the upper member 311, or a tool that can be sleeved onto an outer surface of the upper member 311, to rotate the upper member 311 clockwise or counterclockwise. The recessed portion 231 of the third link 23 of the linkage device 2 further provides the rider with a wider operating space during adjustment, and when the upper member 311 is rotated to different angular positions, the tool can be inserted into different operation holes 313 to facilitate rotation by the rider.

When the upper member 311 is rotated, the upper member 311 is screwed into or out of the lower member 312 to increase or decrease a downward force, thereby causing the lower member 312 together with the upper member 311 to move linearly in the axial direction relative to the seatpost 1. The limiting member 5 is fixed to the seatpost 1 and inserted into the elongated limiting slot 314 of the lower member 312. Thus, when the upper member 311 is rotated, the limiting member 5 is engaged in the limiting slot 314 to prevent the lower member 312 from rotating together with the upper member 311, thereby avoiding idle rotation, while still allowing the lower member 312 to move vertically according to the configuration of the limiting slot 314.

When the rider rotates the upper member 311 of the pressure adjusting unit 31 clockwise to apply a downward force, the lower member 312 together with the upper member 311 moves downward relative to the seatpost 1. The lower member 312 then applies a force to the buffering member 4 through the cap member 33. Since one end of the buffering member 4 is fixedly abutted against the auxiliary pressure adjusting unit 32, the buffering member 4 is compressed to increase the preload thereof.

When the rider rotates the upper member 311 of the pressure adjusting unit 31 counterclockwise to reduce the downward force, the lower member 312 together with the upper member 311 moves upward relative to the seatpost 1, and the buffering member 4 simultaneously releases the compression force to reduce the preload thereof.

Furthermore, the auxiliary pressure adjusting unit 32 of the adjustment device 3 abuts against the buffering member 4 through the cap member 33. The auxiliary pressure adjusting unit 32 may, for example, be a threaded element or include a fixing seat and a threaded element inserted into the fixing seat. A portion of the auxiliary pressure adjusting unit 32 protrudes outward from the seatpost 1, such that when the seatpost 1 is disassembled for replacement, the rider may also rotate the auxiliary pressure adjusting unit 32 to change the preload of the buffering member 4 by adjusting the tightness of the auxiliary pressure adjusting unit 32. When the auxiliary pressure adjusting unit 32 is tightened, the buffering member 4 is pushed upward and compressed to increase the preload. Conversely, when the auxiliary pressure adjusting unit 32 is loosened, the buffering member 4 releases the compression force and extends to reduce the preload.

In another aspect, the lower member 312 of the pressure adjusting unit 31 of the adjustment device 3 may further protrude a fixing rod (not shown) from a central portion thereof. The fixing rod may, for example, be a screw rod. A plurality of upper members 311 are screwingly sleeved onto the fixing rod of the lower member 312, and each upper member 311 may, for example, be a nut. By stacking the plurality of upper members 311, the overall thickness of the plurality of upper members 311 may exceed the length of the fixing rod of the lower member 312, such that the pushing member 24 of the linkage device 2 may abut against the uppermost one of the upper members 311. The rider may likewise rotate the upper member 311 to drive the lower member 312 to move linearly relative to the seatpost 1, thereby achieving adjustment of the preload of the buffering member 4.

The advantages of the shock-absorbing seatpost assembly of the present invention are as follows.
1. In the preload adjustable shock-absorbing seatpost assembly of the present invention, one end of the pressure adjusting unit of the adjustment device protrudes outward from the seatpost. Thus, the rider can directly adjust the pressure adjusting unit without removing the seatpost, thereby changing the preload of the buffering member so that the rider can quickly and conveniently perform preload adjustment.
2. In the preload adjustable shock-absorbing seatpost assembly of the present invention, the pressure adjusting unit of the adjustment device abuts against the linkage device. When the rider sits on the saddle, the linkage device is actuated and pushes the pressure adjusting unit of the adjustment device abutted against the linkage device, thereby applying a force to the buffering member so that the buffering member offsets and attenuates vibration, providing a comfortable riding experience.

Finally, it should be noted that the constituent elements disclosed in the above embodiments of the present invention are only taken as examples for illustration, not intended to limit the scope of the present invention. The substitution or variation of other equivalent elements should be included within the scope of the following claims of the present invention.

## Claims

1. A shock-absorbing seatpost assembly, characterized comprising:
a seatpost (1);
a linkage device (2) disposed at an end of the seatpost (1);
an adjustment device (3) movably inserted into the seatpost (1) and provided with a pressure adjusting unit (31) that abuts against the linkage device (2) and includes an end protruding outward from the end of the seatpost (1); and
a buffering member (4) disposed inside the seatpost (1) and provided with an end abutted against the pressure adjusting unit (31) of the adjustment device (3).

2. The shock-absorbing seatpost assembly as claimed in claim 1, **characterized in that** the linkage device (2) comprises a first link (21), a second link (22), and a third link (23); the first link (21) and the third link (23) each have an end connected with the end of the seatpost (1) in a way that the other ends of the first link (21) and the third link (23) are respectively connected with two ends of the second link (22).

3. The shock-absorbing seatpost assembly as claimed in claim 2, **characterized in that** the third link (23) of the linkage device (2) is formed with a recessed portion (231).

4. The shock-absorbing seatpost assembly as claimed in claim 1, **characterized in that** the linkage device (2) comprises a pushing member (24) that abuts against the pressure adjusting unit (31) of the adjustment device (3).

5. The shock-absorbing seatpost assembly as claimed in claim 4, **characterized in that** the pushing member (24) is a columnar roller.

6. The shock-absorbing seatpost assembly as claimed in claim 1, **characterized in that** the adjustment device (3) further comprises an auxiliary pressure adjusting unit (32) that abuts against the other end of the buffering member (4) and protrudes outward from the other end of the seatpost (1).

7. The shock-absorbing seatpost assembly as claimed in claim 6, **characterized in that** the adjustment device (3) further comprises two cap members (33) respectively disposed at the end and the other end of the buffering member (4), such that the buffering member (4) is abutted against the pressure adjusting unit (31) and the auxiliary pressure adjusting unit (32) through the two cap members (33) of the adjustment device (3).

8. The shock-absorbing seatpost assembly as claimed in claim 1, **characterized in that** the pressure adjusting unit (31) of the adjustment device (3) comprises a lower member (312) and an upper member (311) inserted into the lower member (312); the lower member (312) is provided at an outer periphery thereof with a limiting slot (314), into which a limiting member (5) is inserted through the seatpost (1).

9. The shock-absorbing seatpost assembly as claimed in claim 8, **characterized in that** the upper member (311) of the pressure adjusting unit (31) has an end formed with external threads, and the other end formed with at least one operation hole (313); the lower member (312) of the pressure adjusting unit (31) has an end formed with internal threads screwingly engaged with the external threads of the upper member (311).

10. The shock-absorbing seatpost assembly as claimed in claim 1, **characterized in that** the pressure adjusting unit (31) of the adjustment device (3) comprises a plurality of upper members (311) and a lower member (312) having a fixing rod, onto which the plurality of upper members (311) are sleeved; the lower member (312) is provided at an outer periphery thereof with a limiting slot (314), into which a limiting member (5) is inserted through the seatpost (1).
